# EUROPEAN PATENT SPECIFICATION

(11) **EP 1 371 525 B1**
(45) Date of publication and mention of the grant of the patent: **21.11.2007**
(21) Application number: 03011404.5
(22) Date of filing: 20.05.2003
(51) Int. Cl.: B60R 21/09, B60T 7/06

(54) **Device to cut the axle of rotation of a pedal in a motor-vehicle**
Vorrichtung zum Durchtrennen einer Pedaldrehachse in einem Motorfahrzeug
Dispositif pour sectioner l'axe d'un pédalier automobile

(30) Priority: 12.06.2002 IT TO20020497
(43) Date of publication of application: 17.12.2003
(73) Proprietor: Sistemi Comandi Meccanici S.C.M. S.p.A., 20011 Corbetta (MI) (IT)
(72) Inventor: La Rosa, Ciacomo, 90144 Palermo (IT); Cavaglia', Renato, 10040 Volvera (TO) (IT); Ballari, Marco, 10040 Gerbole di Volvera (TO) (IT)
(74) Representative: Di Francesco, Gianni

(56) References cited:
- EP-A- 1 074 445
- WO-A-99/59844
- WO-A-02/051669
- DE-A- 10 105 546
- FR-A- 2 822 120

## Description

### DESCRIPTION OF THE INVENTION

The present invention refers to a device adapted to break/cut the axle of rotation of a pedal in a motor-vehicle in case of crash, namely the axle of rotation of the brake pedal.

When a motor-vehicle suffers an accident due to the frontal impact with an obstacle, the driver gets injured at the lower part of his legs since he is generally keeping his foot on the brake pedal.

In order to avoid or limit injuries to the driver's legs, devices are utilised in the automotive technique which are adapted to break the plastic rotation axle of the pedal, so that the legs of the driver do not receive the whole force of the impact.

Among the known solutions, the one set forth in European Patent n EP 0965506 includes blades to cut the axle of rotation of the brake pedal, the blades being connected by means of a second axle of rotation to the support of the pedal and being pushed against said first axle of rotation of the pedal in case the support moves towards a fixed part of the vehicle.

This solution is more advantageous with respect to other solutions which are more complex and bulky, yet it presents the disadvantage that a double axle of rotation is needed, so that the support of the pedal must be bigger and therefore more expensive. Furthermore, a device with the technical features of the preamble of claim 1 is disclosed in EP-A-1 074 445.

It is an object of the present invention to provide a device adapted to break the axle of rotation of a pedal of a motor-vehicle in case of frontal impact and to overcome the aforementioned drawbacks.

Said object is achieved by means of a device presenting the characteristics set forth in claim 1.

Further advantages and characteristics wil become more clear from the following description referring to the appended drawings provided as non restrictive example, in which:

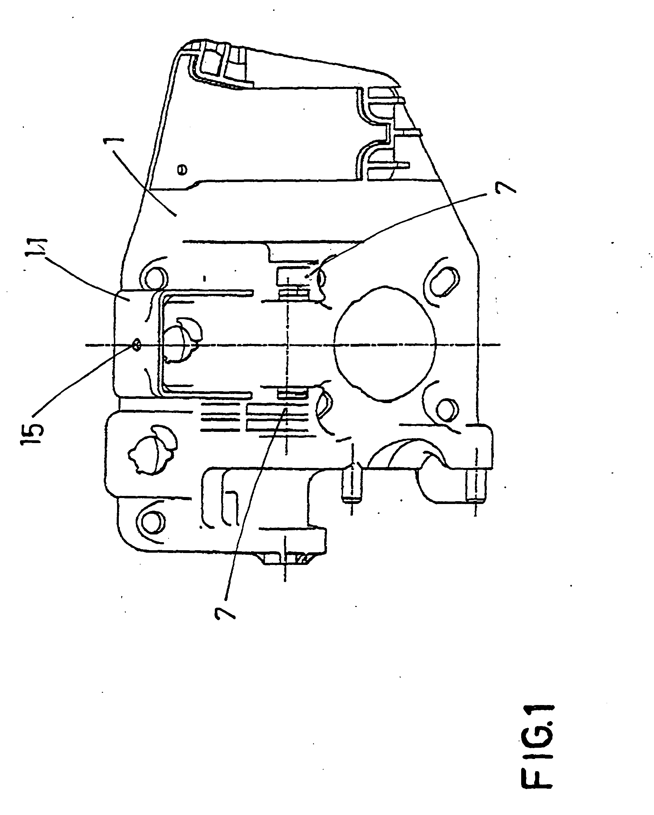

figure 1 is a top view of the support of the pedal of the motor-vehicle, provided with the cutting device according to the invention;
figure 2 is a section view of the support of the pedal along the line II-II in figure 1, plus the pedal mounted on its axle;
figure 3 is a perspective view of the support in figure 1 with the cutting device inserted on it and the pedal mounted on its axle of rotation;
figure 4 is a perspective view of a second preferred embodiment of the device according to the invention;
figure 5 is a partial section view of part of the device in figure 4;
figure 6 is a perspective view of a third preferred embodiment of the device according to the invention, and
figure 7 is a partial section view of part of the device in figure 6.

With reference to the appended drawings it is to be noted that it has been represented a support 1, preferably made of plastic material, for the brake pedal 2, which is mounted ahead of a fixed structure of the motor-vehicle located on top of it and consisting, as shown, of a the front crosspiece 3 located under the dashboard of the passenger compartment.

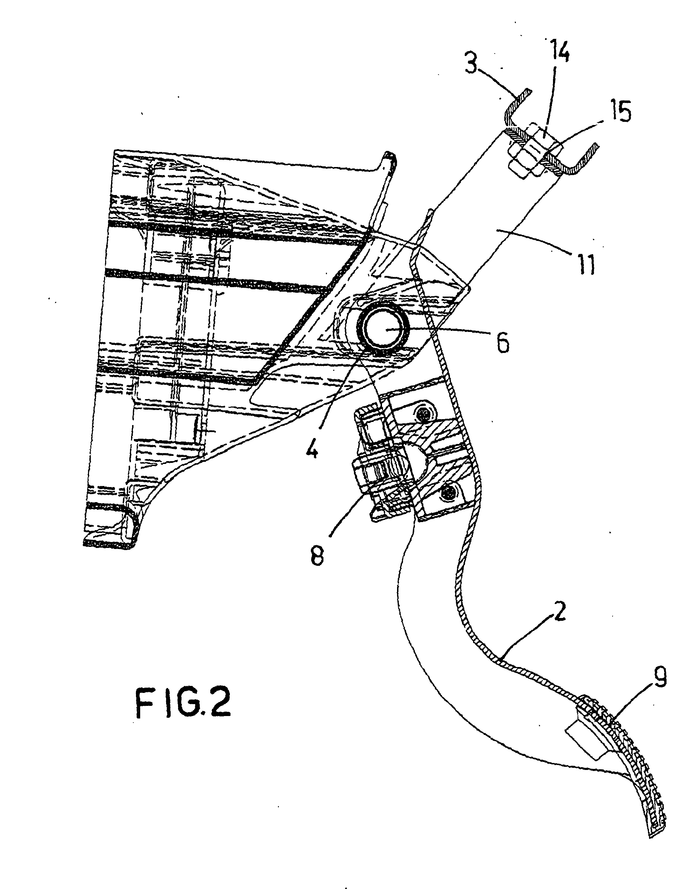

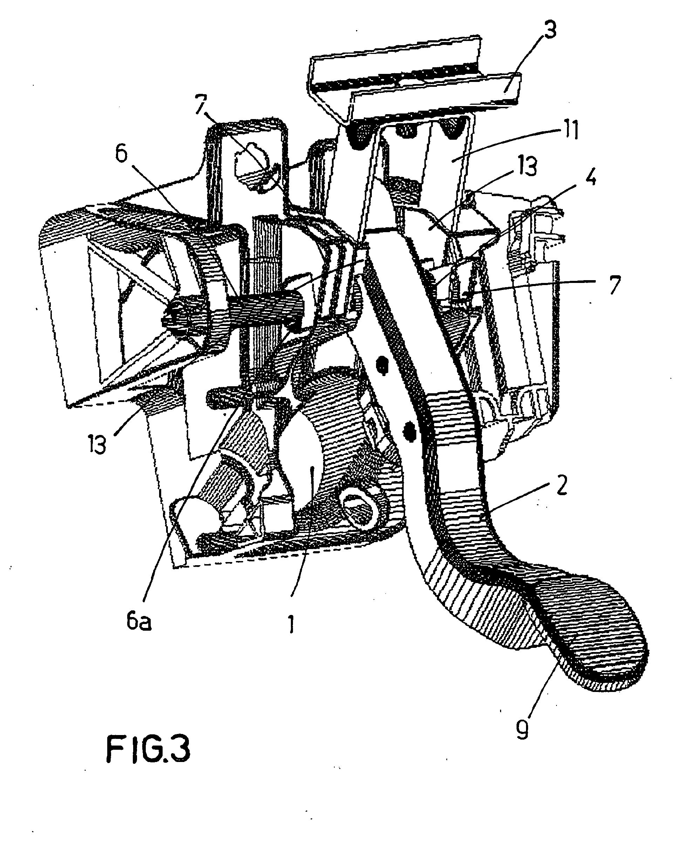

As it can be seen in figures 2 and 3, the upper part of the pedal 2 includes a hub 4 through which passes an axle of rotation 6, made of soft material such as plastic.

The ends of the shaft are supported by holes 6a in ears 7 made integral with the body of the support 1.

The pedal 2 presents a connection device 8 for the control rod of the breaking device (not shown) being provided at its lower end with a footboard 9 where the foot of the driver rests.

According to the invention, the cutting device includes a cutting means consisting of a sort of double-blade guillotine 11 presenting a basically inverted U shape and inserted in slide seats 13 made integral with the body of the support 1.

The double blade 11, mounted on the vehicle presents the base of the U directed upwards. It is adapted to be connected, by means of a bolt 14 passing through a seat 15 made at the base of the U, to the front crosspiece 3 than in normal conditions is located over the support 1. Therefore the blades 11 are facing the axle 6 as it can be seen in figures 2 and 3.

In case of frontal impact with a fixed or mobile obstacle, or anyway in case of an impact directed towards the rear part of the motor-vehicle, the front part of the motor vehicle moves backward dragging with it the support 1 of the pedal 2.

In this way the axle 6 is pushed against the blades 11 which, being connected to the front fixed structure that generally doesn't moves backward or does it just a little, cut said axle 6 thus releasing the pedal.

In this way, in case of an impact that deforms the front part of the motor-vehicle, the pedal is released and the driver is no longer subjected to any dangerous pressure on his joints.

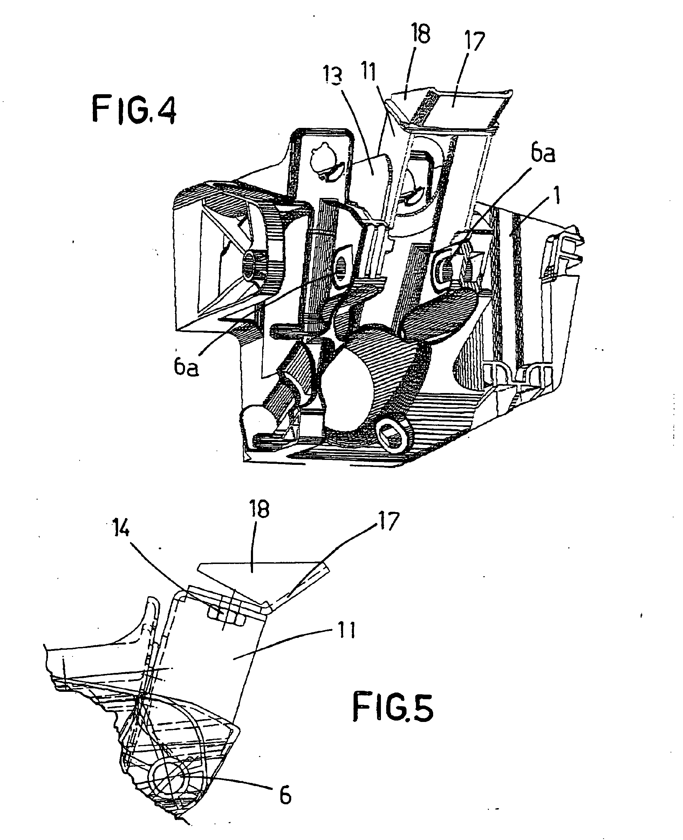

In the following, two additional embodiments of the cutting device according to the invention will be described with reference to figures 4 to 7.

Said embodiments have been realised in order to improve the direction of the cutting blade 11 at the moment of the impact.

In the following description, parts which have not suffered major modifications will be indicated by the same reference numbered used in the first embodiment previously described.

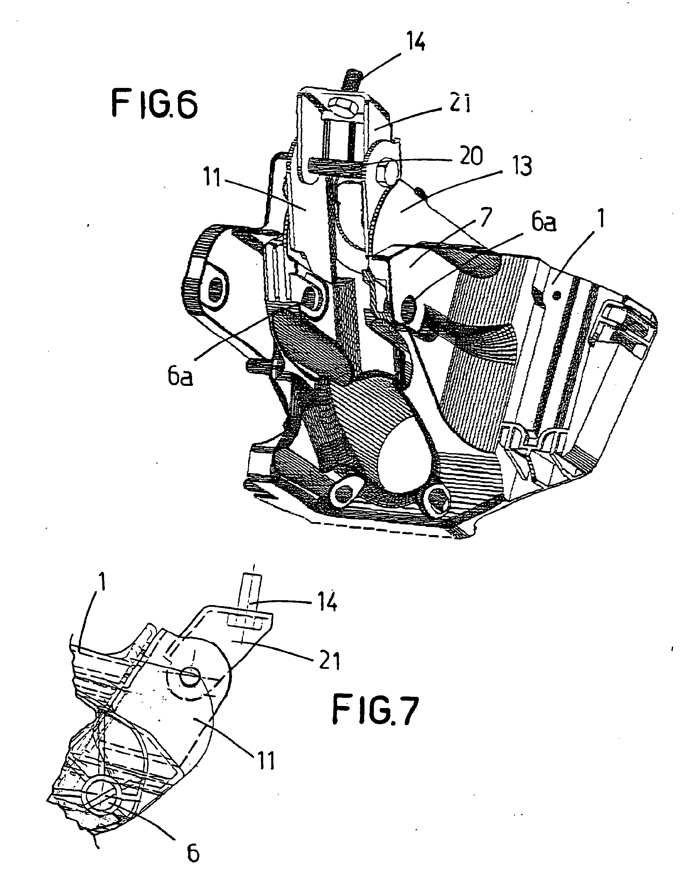

The second embodiment shown in figures 4 and 5 presents a L-shaped bracket 17 fixed by means of a bolt 14 on the upper base of the U-shaped blade.

Said bracket presents triangular sides 18 which are integral with only one of its two walls, so that the angle formed between the wall provided with sides and the wall which has no sides, can widen as a consequence of the rotation of one wall or both of them, but cannot be reduced since it is kept by said sides 18 against which the wall with no sides stops.

The bracket shall therefore be fixed, by means of welding or any other adequate way, to the fixed part of the motor vehicle (not shown) and its wall shall not be connected to the blade 11.

This kind of assembly will allow the blade 11 to vary its inclination in relationship to the axle 6 so that it can cut it in any case.

The third embodiment shown in figures 6 and 7 presents a bracket 21 rotatably connected to the upper part of the blades 6 and 7 by means of the through bolt 20. The shape of the bracket is that of an inverted U. In other words the double U-shaped blade of the first embodiment has been modified and is now consisting of two parts rotatably connected between them and consisting of the blades 11 and the bracket 21.

The connection between the two parts now achieved by means of a single through bolt, can be also achieved by means of any equivalent means, such as two short bolts, that is one bolt for each blade.

The U-shaped blade can be connected to the fixed part of the motor-vehicle by means of the bolt 14, as in the embodiment previously described.

In this third embodiment too, the blades 11 are connected to the fixed part of the motor vehicle so that in case of an impact that causes the whole support of the pedal to move, the blades are correctly guided towards the axle 6 in order to cut it.

## Claims

1. A device to cut the axis of rotation (6) of a pedal of a motor vehicle, said axle being made of soft material and being supported by a support (1) which is fixed to the floor of the passenger compartment, near a fixed structure such as the front crosspiece (3) connected to the bodywork of the motor-vehicle, a cutting means (11) to cut said axle of rotation (6) which is connected with a fixed structure of the motor-vehicle in a position such that it can be directed towards the axle (6) by means of sliders (13) made integral with the support (1), **characterised in that** the cutting means (11) is a two parts blade rotatably connected between them and consisting of two single blades (11) and of a two arms bracket (21); each one of said blades being connected to an arm of the bracket (21).

2. A cutting device as claimed in claim 1 **characterised in that** each blade (11) and the bracket (21) are rotatably connected by means of one or more bolts (20).

3. A cutting device as claimed in claim 1 **characterised in that** the bracket (21) is an U - shaped bracket.

4. A cutting device as claimed in claim 3 **characterised in that** the U-shaped bracket is integral with a fixed part of the frame of the motor-vehicle.

## Patentansprüche

1. Vorrichtung zum Schneiden der Drehachse (6) eines Pedals eines Kraftfahrzeugs, wobei die Achse aus einem weichen Material hergestellt ist und durch eine Halterung (1) gehalten wird, die am Boden des Fahrgastraumes befestigt ist, nahe einer feststehenden Struktur, wie beispielsweise dem vorderen Querträger (3), verbunden mit dem Aufbau des Kraftfahrzeugs, ein Schneidmittel (11) zum Schneiden der Drehachse (6), das mit einer feststehenden Struktur des Kraftfahrzeugs verbunden ist in einer Position derart, dass es mit Hilfe von integral mit der Halterung (1) hergestellten Gleitstücken (13) zu der Achse (6) hin gerichtet werden kann, **dadurch gekennzeichnet, dass** das Schneidmittel (11) eine Klinge mit zwei drehbar miteinander verbunden Teilen ist und aus zwei einzelnen Klingen (11) und aus einem Bügel (21) mit zwei Armen besteht, wobei jede der Klingen mit einem Arm des Bügels (21) verbunden ist.

2. Schneidvorrichtung nach Anspruch 1, **dadurch gekennzeichnet, dass** jede Klinge (11) und der Bügel (21) mit Hilfe eines oder mehrerer Bolzen (20) drehbar verbunden sind.

3. Schneidvorrichtung nach Anspruch 1, **dadurch gekennzeichnet, dass** der Bügel (21) ein U-förmiger Bügel ist.

4. Schneidvorrichtung nach Anspruch 3, **dadurch gekennzeichnet, dass** der U-förmige Bügel integral mit einem feststehenden Teil des Rahmens des Kraftfahrzeugs ist.

## Revendications

1. Dispositif pour sectionner l'axe de rotation (6) d'une pédale d'un véhicule motorisé, ledit axe étant fabriqué à partir d'un matériau souple et étant supporté par un support (1) qui est fixé au sol du compartiment passager, à proximité d'une structure fixe telle que la traverse avant (3) raccordée à la caisse du véhicule motorisé, un moyen de sectionnement (11) pour sectionner ledit axe de rotation (6) qui est raccordé à une structure fixe du véhicule motorisé dans une position telle qu'il peut être dirigé vers l'axe (6) au moyen de coulisseaux (13) fabriqués d'un seul tenant avec le support (1), **caractérisé en ce que** le moyen de sectionnement (11) est une lame en deux parties raccordée de manière rotative entre celles-ci et constituée de deux lames uniques (11) et d'un support à deux bras (21) ; chacune desdites lames étant raccordée à un bras du support (21).

2. Dispositif de sectionnement selon la revendication 1, **caractérisé en ce que** chaque lame (11) et le support (21) sont raccordés de manière rotative au moyen d'un ou de plusieurs boulon(s) (20).

3. Dispositif de sectionnement selon la revendication 1, **caractérisé en ce que** le support (21) est un support en forme de U.

4. Dispositif de sectionnement selon la revendication 3, **caractérisé en ce que** le support en forme de U est solidaire d'une partie fixe du châssis du véhicule motorisé.
